# EUROPEAN PATENT APPLICATION

(11) **EP 3 457 638 A1**
(43) Date of publication of application: **20.03.2019**
(21) Application number: 17191906.1
(22) Date of filing: 19.09.2017
(51) Int. Cl.: H04L 12/40, H04L 29/08

(54) **MESSAGE HANDLER AND METHOD FOR CONVERTING A DATA STREAM**

(71) Applicant: Siemens Aktiengesellschaft, 80333 München (DE)
(72) Inventor: Kress, Matthias, 90425 Nürnberg (DE); Käbisch, Sebastian, 86163 Augsburg (DE); Nickles, Jochen, 90763 Fürth (DE)

(57) **Abstract**

A message handler and a method for mutually converting a data stream of a serial bus communication into a semantically enriched data model are disclosed. In one embodiment, the message handler is operable for querying an identifier of a data segment and bidirectionally assigning variables in said data segment into properties of a semantic description.

## Description

### TECHNICAL FIELD

The disclosed embodiments relate to a message handler and method for converting a data stream.

### BACKGROUND

Various kinds of serial busses are typically used for a communication link between components in an automotive or a manufacturing engineering area. Such communication links include standards entitled Controller Area Network or CAN, Local Interconnect Network or LIN and FlexRay.

A CAN bus, for instance, is designed for transporting messages or data segments over a bus, wherein messages are characterized by a message identifier depending on the type of transmitted data. Examples for transmitted data include sensor values, commands, errors etc.

One major drawback of such communication links is - despite the standardized nature - the necessity to adapt each component to an individually configured system design. In other words, even these standardized communication links do not solve the problem of requiring each interconnected component to be specially adapted to the overall system.

The standardized protocol must be adapted to parameters required by all the interconnected components and the interconnected components must support the communication link parameters used by the system design. Examples of communication link parameters include a particular message identifier used for a sensor value of interest, a kind of data type used for expressing the sensor value, the baud rate used for communication, a type of identifier etc.

A specific configuration of such communication link parameters depends on the system design which differs from system to system. Accordingly, even when components have been designed to be compatible with a communication link, they must still be adopted to the requirements of the system. Conversely, the system design has to be adopted for the case that additional components have to be added or existing components have to be amended in terms of functionality.

The prevailing drawbacks with serial bus communications even exacerbate in cases where communications between components of a serial bus with bus-external devices have to be designed. It would be particularly desirable to allow components to exchange data, announce or invoke services offered by bus-external devices, or share resources with bus-external devices.

Exchanging a data stream of a serial bus with a higher application domain such as devices residing in an external communication network - or the web in general - is particularly challenging since the above mentioned communication link parameters have to be mapped from a raw data representation to a data representation of the higher application domain. Unlike a bus-based data representation, the latter representation of the higher application domain does not provide communications on the basis of particular message identifiers but uses a semantically enriched data representation in such a way that machines or devices are able to understand and interpret the semantic data representation. At present, attempts of exchanging data between serial bus components and bus-external devices typically demands a hand-based engineering and configuration of device interfaces, which have to be hand-tailored to the specific system design of the serial bus connected components.

### SUMMARY AND DESCIPTION

At present, means for facilitating an integration of a serial bus communication into a semantically enriched data model are lacking.

Accordingly, there is a need in the art for mutually converting a data stream of a serial bus communication into a semantically enriched data model.

The present invention is directed to solving these and other problems and disadvantages of the prior art. According to embodiments of the present invention, a message handler for mutually converting a data stream of a serial bus communication into a semantically enriched data model is proposed, wherein the message handler includes:
- a transceiver unit for accessing a data segment in said bus based communication stream, the data segment identified by an identifier and including at least one variable;
- a semantic repository for retrieving a semantic description of said data segment expressed within said data model, the semantic description including at least one property, wherein one of said properties is representing said identifier;
- a communication interface for exchanging one or more of said data models;
and wherein the message handler is operable for querying said identifier and bidirectionally assigning variables in said data segment into properties of the semantic description.

The proposed message handler unifies a heterogeneous data usage of a bus-based communication media by using a semantic description for at least one data segment of interest. The data segment may relate to a message sent on the bus, or, alternatively to a group of messages, whereby the message may deliver values of variables along the participating components on the bus.

The semantic description of a data segment is adapted to the specifics of the bus based communication in that it includes a property representing an identifier which is related to the identifier of a respective data segment. After this assignment between the data segment and the semantic description is fixed, one or more variables in said data segment are assigned into properties of the semantic description, thereby amending the semantic description with values of variables acquired from variables of the data segments.

In the opposite direction properties of the semantic description are assigned into variables of the data segment. In other words, the message handler according to embodiments in this disclosure is capable of mutually converting data stream of a serial bus communication into a semantically enriched data model

In accordance with embodiments of the present invention the serial bus may be a CAN bus, a LIN bus or a FlexRay bus.

In accordance with further embodiments of the present invention the semantic description may be provided by an XML notation (Extensible Markup Language), a JSON notation (Java Script Object Notation) or a JSON-LD (Java Script Object Notation for Linked Data) notation.

In accordance with further embodiments of the present invention the semantic description may be provided by a binary XML representation, a binary JSON representation and/or a binary JSON-LD representation

In accordance with further embodiments of the present invention the semantic description may be provided by an N-triples representation and/or a turtle notation. A triple store or RDF store (Resource Description Framework) is a database for the storage and retrieval of triples through semantic queries. A triple is a data entity composed of subject-predicate-object. Turtle (Terse RDF Triple Language) is a format for expressing data in the Resource Description Framework (RDF) data model. N-Triples is a format for storing and transmitting data. It is a line-based, plain text serialization format for RDF (Resource Description Framework) graphs, and a subset of the Turtle (Terse RDF Triple Language) format In accordance with further embodiments of the present invention the semantic description is a Thing Description according to at least one recommendation of the World Wide Web Consortium or W3C.

In accordance with further embodiments of the present invention the semantic description, one of the properties of the semantic description is representing a start bit of the data segment, i.e. a numeral position in the bit stream of the beginning of a data segment. Another property of the semantic description may represent a bit length of the data segment.

In accordance with still other embodiments of the present invention, the data model exchanged by the communication interface may be a subset of the data model stored within the memory of the message handler. This embodiment would grant for a protection of data sensitive parts of data models to be exchanged with third parties for instance.

In accordance with further embodiments of the present invention the semantic description or a subset of the semantic description may be announced by a web service, or, alternatively or additionally, stored for a common access. The semantic description advantageously allows for standardized reasoning and search mechanisms as a standard interface to retrieve and search data. SPARQL (SPARQL Protocol and RDF Query Language) is an example for a query language, which further allows retrieving and manipulating data stored for a common access.

Alternative embodiments of the present invention relate to a method for converting a data stream of a serial bus communication into a semantically enriched data model and/or, vice versa, a method for converting a semantically enriched data model into a data stream of a serial bus communication.

Alternative embodiments of the present invention relate to a computer program product configured to execute a method for converting a data stream of a serial bus communication into a semantically enriched data model and/or a method for converting a semantically enriched data model into a data stream of a serial bus communication.

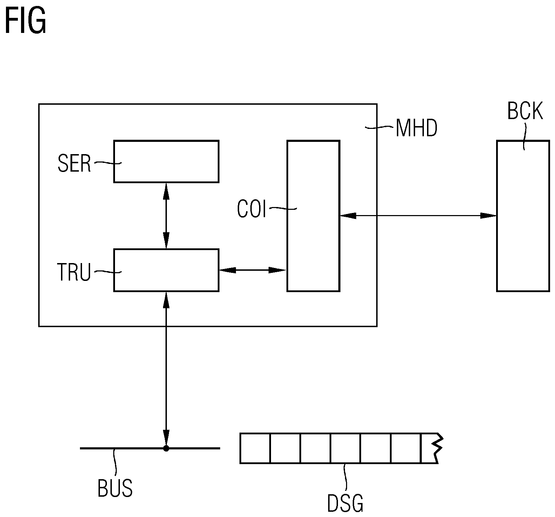

### BRIEF DESCRIPTION OF THE DRAWING

FIG shows a block diagram of a message handler according to an embodiment of the invention.

### DETAILED DESCRIPTION

The FIG shows a block diagram of a message handler MHD with a transceiver unit TRU interfacing to a serial bus BUS. The transceiver unit TRU is operated for accessing messages or data segments DSG delivered by a data stream over the serial bus. Accessing messages includes reading, amending, writing creating or deleting data segments DSG.

A data segment DSG in the serial bus communication is usually identified by a system-wide identifier and includes at least one variable, i.e. a value of a variable in its payload. The data segment DSG may also include other identifiers, additional headers, a start bit position which delimits the current data segment from its successor and predecessor within the data stream transported over the serial bus BUS, a bit length characterizing the bit count included in the data segment etc. The FIG emphasizes the serial bit stream nature of the depicted data segment DSG.

The message handler MHD further includes a semantic repository SER for retrieving a - not shown - semantic description of the data segment DSG expressed within a semantically enriched data model. A Thing Description, or TD, according to World Wide Web Consortium or W3C recommendations is particularly suitable for this data model.

A Thing Description provides a set of vocabulary for describing physical or virtual entities or »things« in a machine readable format, for example a JSON-LD encoding. JSON or »JavaScript Object Notation« is an open standard format that uses human-readable text to transmit data objects consisting of attribute-value pairs. JSON-LD or »JavaScript Object Notation for Linked Data« is a method of encoding Linked Data using JSON additionally amending a semantic layer onto the JSON specification. The Thing Description comprises semantic metadata for the described thing along with interaction models regarding its properties, actions, and events. Further on, a Thing Description provides a semantic schema in order to render data models machine-understandable. The properties accessible within a Thing Description can be used for reading or amending parameters or values of variables, such sensor reading or an operation state.

Turning back to the embodiment, wherein a semantic description of a specific data segment DSG is expressed by a specific semantic description expressed within a data model, e.g. a Thing Description. Here, a specific Thing Description may be provided, which is explained hereinafter for an exemplarily »signal« or value of a high voltage battery current of an electric vehicle. This Specific Thing Description may be provided by a hardware provider, for instance the hardware provider of the battery, for semantically expressing data signals with regard to the bus communication media such as CAN. The Thing Description is to be regarded like a structure template which will be amended by the current properties, e.g. the actual electrical currency of the high voltage battery. Beyond that, the Thing Description is semantically enriched by a signal name, a unit, a data context, etc.

In this regard, the initial Thing Description serves as an input which will be amended by raw data signals, i.e. actual values provided by bus-based data segments. To this end, the message handler MHD is operable for querying said identifier within both data representations - within the data segment and within the semantic description of the data model - and assigning variables rad from the data segment into properties of the semantic description and/or assigning properties of read from the semantic description into variables of the data segment. After that, the Thing Description allows for a seamless integration into a richer application environment such as into various backend systems BCK. Based on the Thing Description, external applications or web service in a backend system BCK are able to understand the context of the CAN-based signals while applying further operations, e.g. diagnostics.

In order to map a specific semantically enriched data model to the appropriate data segment, the semantic description of the data model includes at least one property representing the identifier of the data segment. Representing may mean including the identical identifier or including a correspondence to the identifier. The correspondence may be of a bijective, surjective or injective nature. In the case of a CAN bus, the identifier would be the CAN-ID of a data segment, which is included as a value of a property in the respective semantic description.

The message handler MHD includes a communication interface COI for a bidirectional exchange of data models.

The following examples shows a snippet of a Thing Description describing a CAN »HV Battery current« signal in a JSON-LD notation.

```
 {
 "@type": ("Property", "HighDataRateSignals"],
 "name": "HV Battery current",
 "outputData": {"type": "number", "minimum": -1600, "maximum": 1612.75},
 "unit" : "A",
 "writable" : false,
 "link" : [{
     "href": "can-id://0x18FF9F1E",
     "start.Bit": 48,
     "bit.Length": 16,
     "media Type": "application/octet-stream"
     }]
 },
```

The JSON keys »name«, »outputData«, »unit«, and »writable« provide metadata of the CAN data signal »HV Battery current« such that the type is of a number with a range between -1600 and 1612.75 and that the unit is Ampere or A.

The JSON key »writable« is characterized by a Boolean false meaning, that the property »HV Battery current« is not intended for changes.

The JSON Object »link« contains the communication metadata for identifying the respective signal on the CAN bus. Here, as identifier the CAN-ID is 0x18FF9F1E is used with the information that this signal value is provided at startBit 48 with a bit length of 16.

The starting key »@type« is used to classify this CAN signal. More precisely, this signal is classified as a Thing Description Property and as a »HighDataRateSignal«.

The disclosed embodiments advantageously avoid both, preconfigurations regarding syntax and semantics in the source code, and adaptation or code extensions due to amended signals in the serial busses.

The embodiments grant for a data exchange between a data stream of a serial bus communication and a semantically enriched data model avoiding cumbersome component interfaces adapted to the specific system design of components connected to the serial bus.

The embodiments provide seamless integration from raw data presentation into a semantically endriched data environment such as a backend system.

The embodiments provide a simple integration of third party application since the usage of a semantically enriched data model is able to provide orientation about the underlying data and how to use them. This leads to an implicit normalization and harmonization of underlying heterogeneous communication protocols.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A message handler for mutually converting a data stream of a serial bus (BUS) communication into a semantically enriched data model, the message handler including:
- a transceiver unit (TRU) for accessing a data segment (DSG) in said data stream, the data segment identified by an identifier and including at least one variable;
- a semantic repository (SER) for retrieving a semantic description of said data segment (DSG) expressed within said data model, the semantic description including at least one property, wherein one of said properties is representing said identifier;
- a communication interface (COI) for exchanging one or more of said data models;
wherein the message handler (MHD) is operable for querying said identifier and bidirectionally assigning variables in said data segment into properties of the semantic description.

2. The message handler according to claim 1, wherein the serial bus (BUS) is one of a CAN bus, a LIN bus or a FlexRay bus.

3. The message handler according to one of the aforementioned claims 1 and 2, wherein the semantic description is provided by an XML notation, a binary XML representation, a JSON notation, a binary JSON representation, a JSON-LD notation, a binary JSON-LD representation, an N-triples representation and/or a turtle notation.

4. The message handler according to one of the aforementioned claims 1 and 2, wherein the semantic description is a Thing Description according to at least one recommendation of World Wide Web Consortium.

5. The message handler according to one of the aforementioned claims, wherein one of said properties of said semantic description is representing a start bit of the data segment (DSG) and wherein another one of said properties of said semantic description is representing a bit length of the data segment (DSG).

6. The message handler according to one of the aforementioned claims, wherein said data model exchanged by the communication interface is a subset of the data model stored within the semantic repository (SER) of the message handler (MHD).

7. A method for converting a data stream of a serial bus communication into a semantically enriched data model, including the steps of:
- accessing a data segment (DSG) in said data stream, the data segment identified by an identifier and including at least one variable,
- retrieving a semantic description of said data segment expressed within said data model, the semantic description including at least one property, wherein one of said properties is representing said identifier; and;
- querying said identifier in said data segment (DSG) and assigning variables in said data segment (DSG) into properties of the semantic description.

8. The method according to claim 7 wherein the semantic description or a subset of the semantic description is announced by a web service.

9. The method according to claim 7 wherein the semantic description or a subset of the semantic description is stored for a common access.

10. A method for converting a semantically enriched data model into a data stream of a serial bus (BUS) communication, including the steps of:
- accessing or creating a data segment (DSG) in said data stream, the data segment identified by an identifier and including at least one variable,
- retrieving a semantic description of said data segment (DSG) expressed within said data model, the semantic description including at least one property, wherein one of said properties is representing said identifier; and;
- querying said identifier in said data segment (DSG) and assigning properties of the semantic description into variables of said data segment.

11. A computer program product comprising program code stored on a non-transitory computer-readable storage medium, the program code, when executed on a computer, is configured to execute a method according to one of the aforementioned claims 7 until 10.
